# EUROPEAN PATENT SPECIFICATION

(11) **EP 0 534 691 B1**
(45) Date of publication and mention of the grant of the patent: **06.12.1995**
(21) Application number: 92308532.8
(22) Date of filing: 18.09.1992
(51) Int. Cl.: A01B 15/18, F16H 25/16

(54) **Coulter adjusting device for reversible plow**
Vorrichtung zur Einstellung eines Scheibenseches von einem Drehpflug
Dispositif de réglage du coutre d'une charrue reversible

(30) Priority: 20.09.1991 JP 268532/91; 20.09.1991 JP 268533/91
(43) Date of publication of application: 31.03.1993
(73) Proprietor: SUGANO FARM MACHINERY MFG. CO. LTD., Sorachi-gun, Hokkaido 075-05 (JP)
(72) Inventor: Tanimizu, Mikio, Inashiki-gun, Ibaraki-ken (JP); Kawano, Kouichi, Ushiku-shi, Ibaraki-ken (JP)
(74) Representative: Shindler, Nigel

(56) References cited:
- FR-A- 1 178 956
- FR-A- 1 296 069
- JP-B- 1 059 841
- LU-A- 49 994
- US-A- 3 039 323

## Description

This invention relates to a coulter adjusting device for a reversible plow in which a coulter fixed to mast frame side is swingable (movable angularly) and/or movable laterally relative to the direction of plowing in accordance with variation of the depth of the plowing or the tread of a tractor for hauling the reversible plow.

The bottom plow machine is a commonly used type of agricultural machine. In use it is hauled by a tractor while one of the bottoms of the bottom plowing machine digs into a soil to a predetermined plowing depth. In a conventional bottom plowing machine, during the plowing operation, the soil (conglomerate clay) is plowed up (scraped out) by the bottom for form a furrow and the plowed-up soil is piled up only at the right side of the furrow with respect to the plowing direction while it is reversed. After one furrow is formed, the tractor is turned on a headland, and then the above operation is repeated to form the next furrow. Therefore, in order to perform plowing with the conventional bottom plowing machine, it is necessary to carry out an opening furrow at a central portion of a field (several portions of the field when the field is broader) at an initial stage, and then plowing is carried out in accordance with a predetermined pattern. As a result, in the field which has been subjected to such plowing, the reversely scraped-out soil is piled up symmetrically with respect to the furrow which is formed in the opening furrowing work. Therefore, it takes a long time to carry out plowing and preparing operations in the field, and the headland must then be plowed up and the plowed-up soil is reversely piled up at the last stage, so that the conventional bottom plowing machine has poor working efficiency.

Starting from the idea that the working efficiency could be improved if the plowing operation was carried out continuously in a field, a reversible plowing machine has been recently proposed. This type of plowing machine has bottoms at upper and lower sides of a bottom frame. In a plowing operation using the reversible plowing machine, the tractor is turned on a headland after a plowing operation for one line on a field to be carried out (that is, one furrow is formed), and then the bottoms at the upper and lower sides are reversed to plow an unplowed line neighbouring the plowed line. Therefore, the continuous plowing operation can be carried out using the reversible plowing machine by intermittently reversing the bottoms.

The reversible plowing machine comprises a reversible plow frame to which bottoms are secured, a non-reversible mast frame which is linked to a tractor through a three-point link, and coulters each of which is arranged to co-operate with one of said bottoms and serves to cut the soil. In a conventional bottom plowing machine using fixed or non-reversible bottoms, each of the coulters if fixedly disposed in front of each corresponding bottom in a plowing direction because the bottom itself is fixed or non-reversible. Accordingly, there is a problem in the positioning of the coulters.

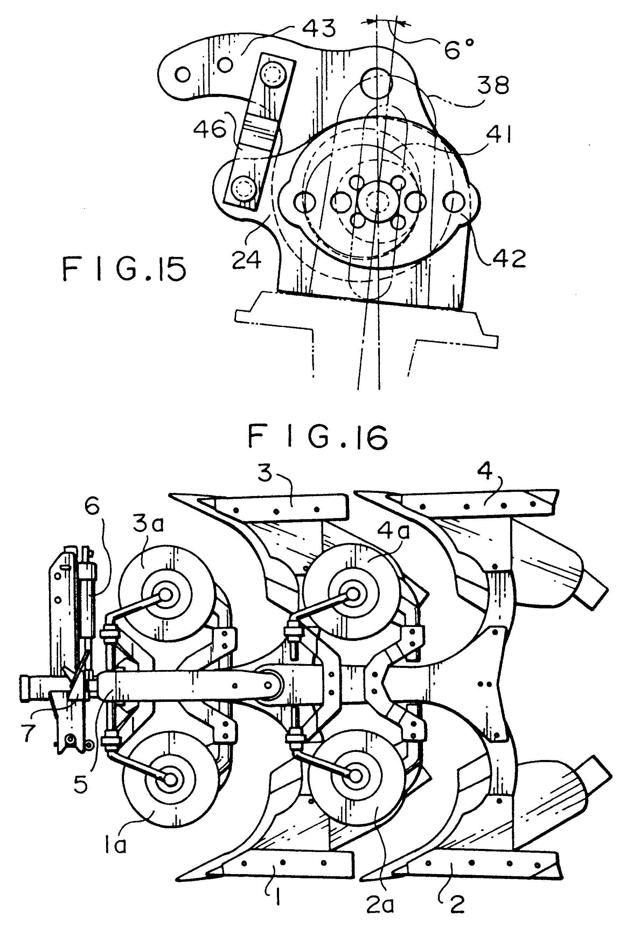

As the simplest means of solving this problem may be adopted a reversible bottom plowing machine as shown in Figure 16. As shown in Figure 16, all coulters 1a, 2a, 3a and 4a which are assigned to bottoms 1, 2, 3 and 4 respectively are secured to a plow frame 5 in such a manner as to be rotatable together with the plow frame 5 relatively to a non-reversible front frame 7 by a extending and retracting a reversing cylinder 6. This machine is relatively simple in construction, but requires considerable driving force for plowing, because it has an extremely long body at the rear of the cross bar, and thus the point of application of force against tractive resistance for the plowing is excessively biassed to one side of the rear, so that much of the driving force of the tractor is wasted.

In order to overcome the above disadvantage, a first coulter which is assigned to a first bottom (nearest to the tractor) may be fixed to a mast frame serving as a non-reversible or fixed member. However, the plowing width (defined as the width of an area to be plowed in a plowing operation for one line) tends to be unintentionally varied due to the inclination of the tractor which also varies in accordance with the plow depth (defined as the depth of the area to be plowed), so that the position of the coulters needs to be adjusted in a lateral direction in correspondence to a reversing operation of the bottoms. Further, in a tractor have a prescribed tread, there frequently occurs a case where a first coulter is not disposed in front of a corresponding first bottom after the reversing operation of the bottoms, because the position of the coulter in the reversing operation is dependent on the tread of the tractor. Accordingly, the position of the coulters is also required to be adjusted in the width direction in accordance with the tread of the tractor. In order to satisfy such a requirement, the mechanical construction of the plowing machine then becomes more complicated.

In order to solve the problem in the position adjustment of the coulters, the same applicant has previously proposed two types of coulters adjusting devices as disclosed in Japanese Post-Examined Publication No. 61-25321 and in Japanese Post-Examined Publication No. 1-59841 respectively.

French specification no. 12 96 069 also shows a coulter adjusting device for use in a reversible plowing machine having a non-reversible mast frame, a bottom frame secured to the non-reversible mast frame in such a manner as to be rotatable or reversible relative to the non-reversible mast frame, a rotatable shaft for rotating or reversing the bottom frame, plural pairs of bottoms fixed to the bottom frame such that each pair of bottoms are secured to upper and lower sides of the bottom frame respectively, and coulters provided in correspondence with each pair of bottoms, at least one of the coulters being secured to the non-reversible mast frame, including means for adjusting the position of the coulter secured to the non-reversible mast frame by moving the coulter on a plane perpendicular to a plowing direction by a desired amount in accordance with the plowing depth and/or the tread of a tractor towing the plowing machine as the bottom frame is reversed, wherein said means comprises coulter support means for supporting the coulter and eccentrically mounted coulter moving means secured to said coulter support means for converting a reversing motion of the bottom frame to a rotary motion thereof to thereby move said coulter support means by an amount corresponding to an eccentric amount of said coulter moving means.

In these coulter adjusting devices the adjustment of offset and inclination of the coulters which are caused by a reversing operation of the bottoms can be performed by effectively using a property of the reversible plow machine. However, this adjustment has to be manually carried out by the user and is relatively cumbersome.

Accordingly the present invention seeks to provide a coulter adjusting device for a reversible plowing machine in which, at the same time as the bottom reversing operation the position adjustment of at least a first coulter can be automatically performed by inclining the coulter by an angle corresponding to inclination of a tractor in accordance with a plow depth.

The invention also seeks to provide a coulter adjusting device for a reversible plowing machine in which, in cooperation with the bottom reversing operation, the position adjustment of at least a first coulter can be automatically performed by moving the coulter in the width direction of a plowing by a distance corresponding to the tread of the tractor.

Accordingly the present invention provides a reversible plow having non-reversible leading coulter and a reversible bottom frame carrying bottoms, attached to the upper and lower sides thereof, and reversible coulters corresponding to each pair of bottoms, and further comprising coulter position adjusting means connected to said reversible frame, and arranged to adjust the position of the leading coulter by a preset amount as the bottom frame is reversed, said coulter position adjusting means comprising means for converting the reversing motion of the bottom frame to an angular motion of the coulter, characterised in that said means comprises an eccentrically mounted cam plate which is swingable as the bottom plate is reversed and is formed with a plurality of spaced apart connection means at predetermined intervals which are set to correspond to desired eccentric amounts, whereby a selected one of the connection means can be linked to said coulter support means to control the degree of adjustment of the coulter position, to allow for different plowing depths and/or the tread or track of a tractor towing the plow.

The invention also extends to a coulter adjusting device for use in a reversible plowing machine having a non-reversible mast frame carrying a leading coulter, a bottom frame secured to the non-reversible mast frame in such a manner as to be rotatable or reversible relative to the non-reversible mast frame, a rotatable shaft for rotating or reversing the bottom frame, plural pairs of bottoms fixed to the bottom frame such that each pair of bottoms are secured to upper and lower sides of the bottom frame respectively, and coulters provided in correspondence with each pair of bottoms, said adjusting device including means for adjusting the position of the non-reversible coulter by moving the coulter on a plane perpendicular to a plowing direction by a desired amount in accordance with the plowing depth and/or the tread of a tractor towing the plowing machine as the bottom frame is reversed, wherein said adjusting means comprises coulter support means for supporting the coulter, and eccentrically mounted coulter moving means secured to said coulter support means for converting a reversing motion of the bottom frame to a rotary motion thereof to thereby move said coulter support means by an amount corresponding to an eccentric amount of said coulter moving means, characterised in that said coulter moving means comprises an eccentrically mounted cam plate which is swingable as the bottom plate is reversed and is formed with a plurality of spaced apart connection means at predetermined intervals which are set to correspond to desired eccentric amounts, whereby a selected one of the connection means can be linked to said coulter support means to control the degree of adjustment of the coulter position, to allow for different plowing depths and/or the tread or track of a tractor towing the plow.

According to one aspect of this invention, the coulter moving means may include pivot means for converting the eccentrically-rotational motion to a swing or angular motion of the coulter support means on the plane, the eccentric amount corresponding to an angle of the angular motion of the coulter support means to thereby incline the coulter on the plane by the angle as the bottom frame is reversed so that the coulter is kept perpendicular to the surface of soil.

In the coulter adjusting device thus constructed, the rotational motion of the bottom in the reversing operation is converted to a pivoting motion by the coulter moving means, and the coulter support means is pivoted through the pivot motion to incline or angularly move the coulter by an angle corresponding to the plowing depth.

According to another aspect of this invention, the coulter moving means may include means for converting the eccentrically-rotational motion to a shift motion of the coulter support means in a plow width direction on the plane, the eccentric amount corresponding to a shift amount of the shift motion of the coulter support means to thereby shift the coulter on the plane by the shift amount as the bottom frame is reversed so that the coulter is kept in its proper location in front of the corresponding bottom.

According to the coulter adjusting device thus constructed, the rotational motion of the bottom in the reversing operation is converted to the shift motion by the coulter moving means, and the coulter support means is shifted in the plowing width direction through the shift motion to shift the coulter by a distance corresponding to the tread of a tractor.
Figure 1 is a side view of a reversible plow machine which is equipped with an embodiment of a coulter adjusting device of this invention:
Fig. 2 is a top view of the reversible plow machine as shown in Fig. 1;

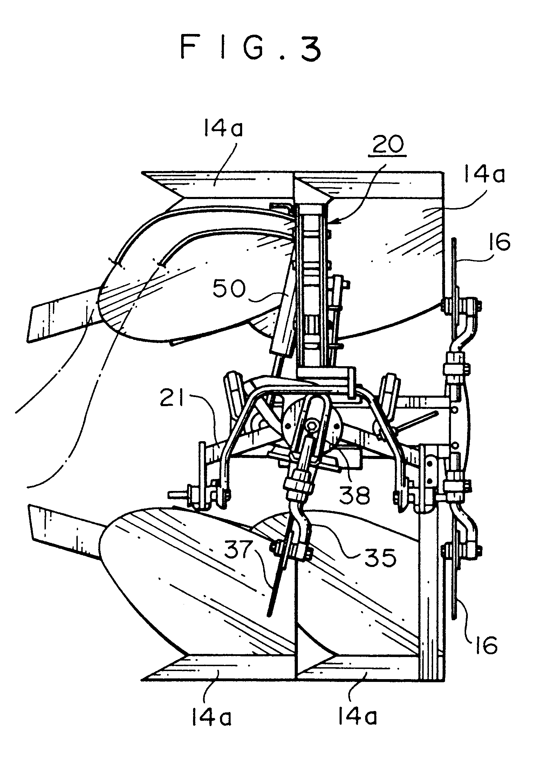

Fig. 3 is a front view of the reversible plow machine as shown in Fig. 1;
Fig. 4 is a detailed side view of a non-reversible member of the reversible plow machine as shown in Fig. 1;

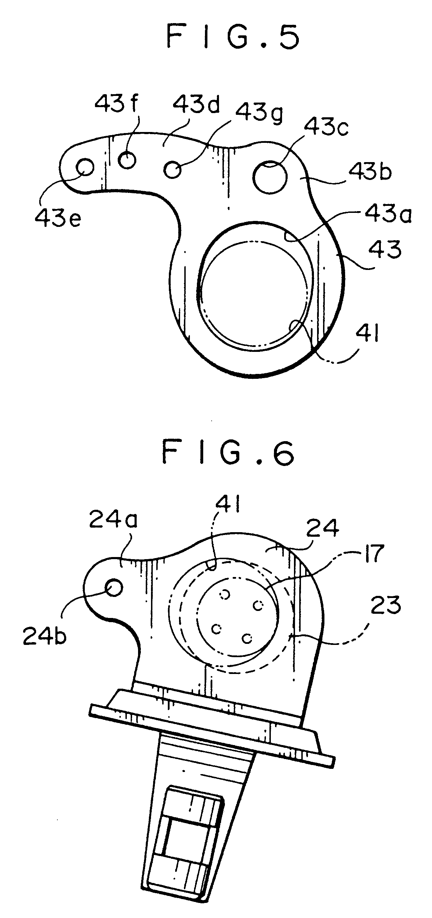

Fig. 5 is a front view of a guide plate;
Fig. 6 is a front view showing a linkage state of a coulter support member and a coulter unit;
Fig. 7 is a front view showing a linkage state of a coulter support member, a guide plate and a coulter unit;
Fig. 8 is a perspective view of a linkage state of a coulter support member, a guide plate and a coulter unit;

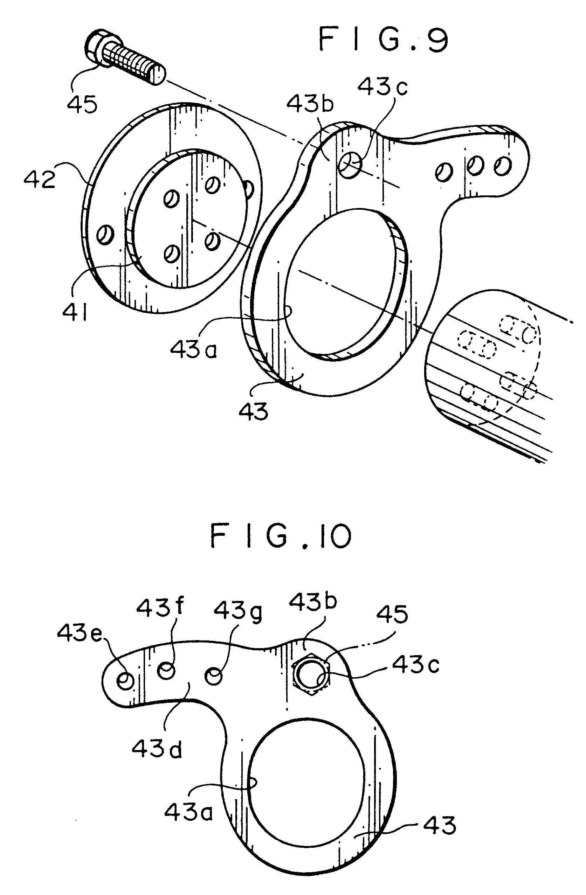

Fig. 9 is a perspective view of a cam plate and a guide plate;
Fig. 10 is a front view of a guide plate;
Fig. 11 is an exploded perspective view of a mast frame and a coulter adjustment device;
Fig. 12 is an exploded perspective view of a coulter unit;
Fig. 13 is a front view showing a state where a coulter unit is inclined by 12°;
Fig. 14 is a front view showing a state where a coulter is inclined by 9°;
Fig. 15 is a front view showing a state where a coulter is inclined by 6°; and
Fig. 16 is a side view of a conventional reversible glow machine.

### DETAILED DESCRIPTION OF PREFERRED EMBODIMENTS

A preferred embodiment according to this invention will be described with reference to the accompanying drawings.

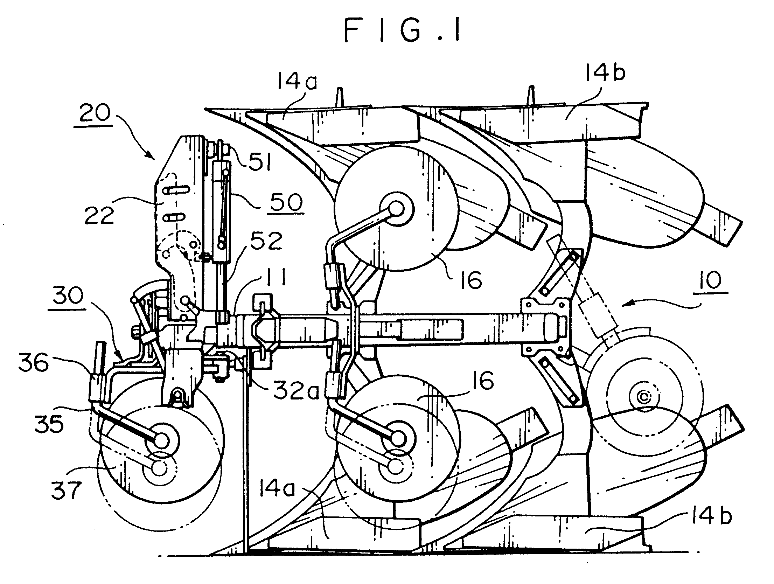

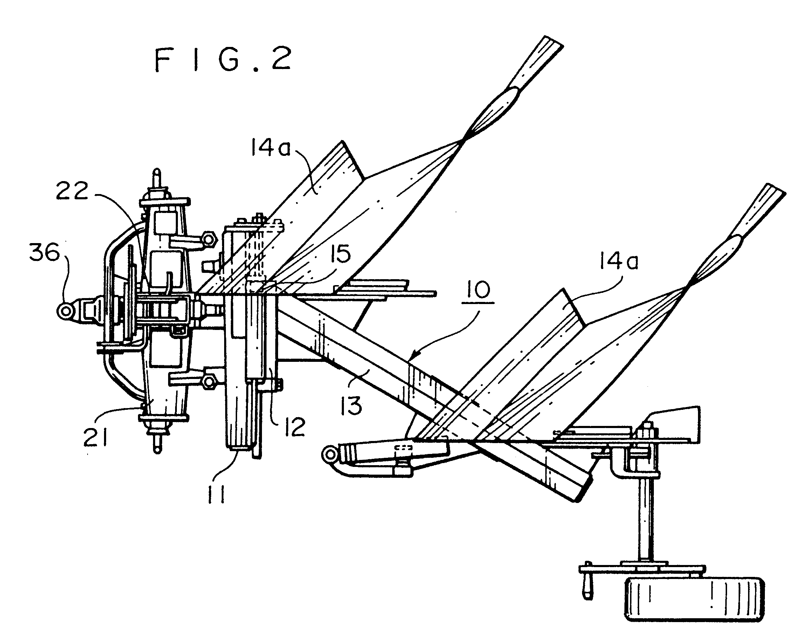

Fig. 1 is a side view of a reversible plowing machine which is equipped with an embodiment of a coulter adjusting device according to this invention. The reversible plowing machine of this embodiment mainly includes a bottom frame 10, and as shown in Figs. 1 and 2, the bottom frame 10 comprises a front frame 11 at a front side thereof, a slide frame 12 secured to the front frame 11 therealong, a rear frame 13 which rearwardly extends from the slide frame 12, and first and second pairs of bottoms 14a and 14b, each pair being provided at upper and lower portions of the rear frame 13.

Each pair of bottoms 14a (14b) at the upper and lower portions of the rear frame 13 have opposite plow-up (scrape-out) directions to each other, and thus the plowed-up soil is placed up alternately at the right and left sides with respect to the plowing direction for each reversing operation of the bottoms. Further, an oil cylinder 15 is provided between the rear frame 13 and the front frame 11 to move the slide frame 12 in a direction perpendicular to the plowing direction as the cylinder extends and retracts, so that the bottoms can be freely offset to a desired position and thus a once-selected orientation of the bottoms can be fixed.

In addition, a first couLter 37 is assigned to the first bottoms 14a while two second coulters 16 are assigned to the second bottoms 14b. Like the conventional plowing machine, the second coulters 16 are mounted in front of the second bottoms 14b on the rear frame 13 is such a manner as to be rotatable (reversible) together with the rear frame 13, so that the coulters 16 are reversible integrally with the second bottoms 14b. If the bottom plowing machine adopts multi-linked (e.g., three-linked) bottoms, a pair of third coulters are also secured to the rear frame 13 such that they are reversible integrally with third bottoms. On the other hand, as described in detail later, the first coulter 37 is secured to the non-reversible or fixed mast frame 20, and thus it is fixedly mounted on the mast frame 20.

In addition, a rotatable shaft 17 is freely rotatably supported by a bearing member of the mast frame 20, and one end of the shaft 17 is secured to the front side of the front frame 11 of the plow frame 10.

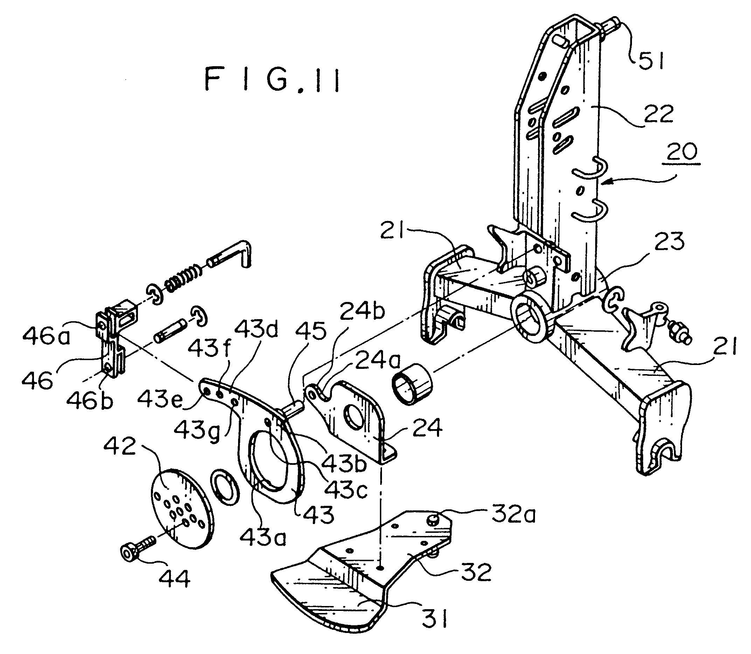

As shown in Fig. 11, the mast frame 20 includes a mast 22 which serves as a main part thereof, and a bifurcated lower frame 21 provided to the lower portion of the mast 22. The bifurcated lower frame 21 has two legs which extend laterally across the direction of plowing in opposite directions to each other, and the mast 22 is upwardly erected from the apex of the bifurcated lower frame 21. A tubular bearing 23 for supporting the rotatable shaft 17 therein is secured to a base portion of the mast 22. The other end of the rotatable shaft 17 is inserted into the tubular bearing 23, and is freely rotatably supported thereby.

A pair of coulter support members 24 and 25 each having a L-shaped section are secured to the bearing member 23 along the length direction thereof, and a coulter unit 30 as described below is supported by the coulter support members 24 and 25.

The coulter unit 30 includes a guide member 32 which has a guide portion 31 at the tip portion thereof and is secured to the frame 20 through a pivot shaft 32a at the other end thereof, and a coulter unit body 33. One end of the coulter unit body 33 is pivotably mounted to the mast frame 20 coaxially with the pivot shaft 32a while the guide portion 31 of the guide plate 32 is mounted on the coulter unit body 33, so that the coulter unit body 33 is sectorially swingable around the pivot shaft 32a in the width direction of the plowing independently of the guide plate 32.

The other end of the coulter unit body 33 is vertically downwardly bent, and this bent portion of the coulter unit body 33 serves as a support end portion 34. A bearing 36 is secured to the support end portion 34, and a coulter support shaft 35 is supported through a clamp 36a by the bearing 36. In addition, a first coulter 37 which is assigned to the first bottoms 14a is secured to the tip portion of the coulter shaft 35.

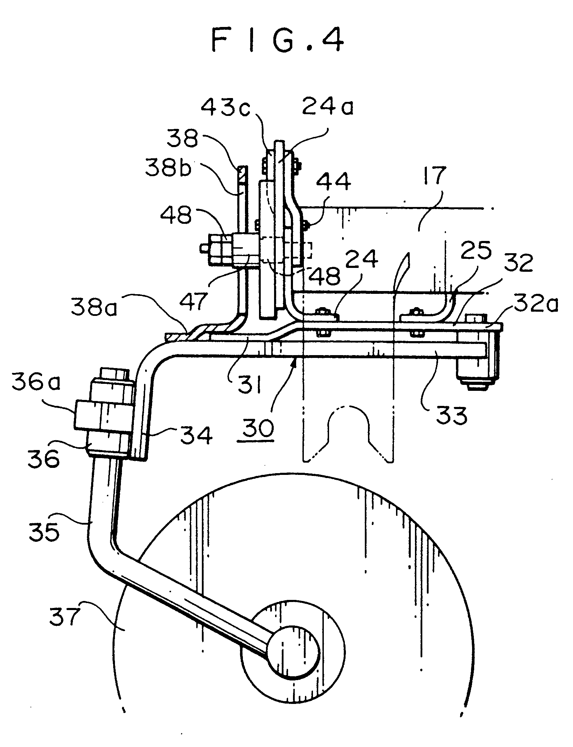

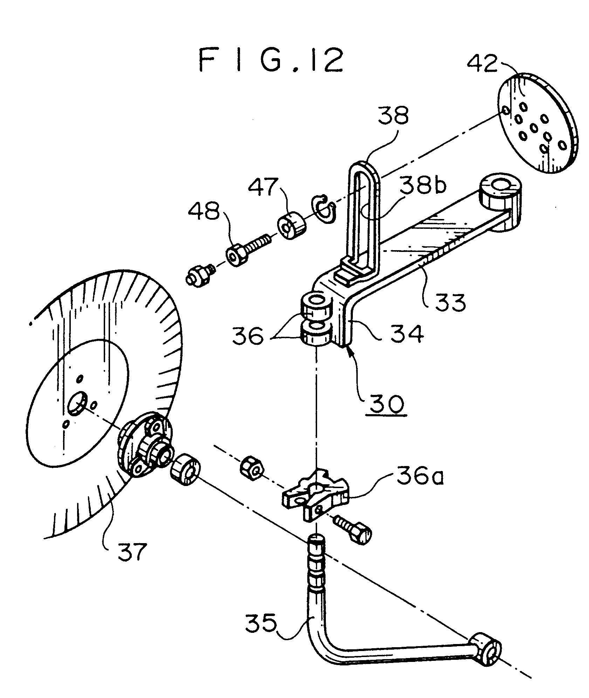

Further, the base portion of the support end portion 34 of the coulter unit body 33 is secured to a base portion 38a of a swing arm 38. The swing arm 38 is perpendicular to the coulter unit body 33, and a guide slot 38b is formed in the swing arm 38 and extends in the longitudinal direction of the swing arm 38 as shown in Figs. 4 and 12.

As shown in Figs. 4 and 11, a cam plate 42 having a cam 41 whose center is eccentric to the rotatable shaft 17 is disposed so as to be confronted to the end surface of the rotatable shaft 17 which is freely rotatably supported by the bearing member 23, and also a guide plate 43 having a vertically-elongated guide hole into which the cam 41 is engagedly inserted is disposed between the end surface of the rotatable shaft 17 and the cam plate 42. The cam plate 42 is fixedly secured to the end surface of the rotatable shaft 17 by tour bolts 44 in such a manner that the rotational center of the cam 41 is eccentric to the rotational center of the rotatable shaft 17. Therefore, interlockingly with the rotation of the rotatable shaft 17, the guide plate 43 is swung through the engagement between the cam 41 of the cam plate 42 and the elongated hole 43a because the cam 41 is eccentrically secured to the rotatable shaft 17.

As shown in Fig. 11, the guide plate 43 is provided with a projection 43b having a bolt hole 43c at the top portion thereof, and the guide plate 43 is swingably secured to the mast frame 20 by commonly inserting a pivot shaft 45 into the bolt hole 43c and a hole 20a formed in the mast frame 20. The guide plate 43 is further provided with an arm 43d which extends outwardly from the top portion of the guide plate 43, and the arm 43d is formed with selection holes 43e, 43f and 43g at the tip portion thereof.

The coulter support member 24 is also provided with an arm 24a which extends laterally and slantly from one side thereof. The arm 24a is so designed as to be shorter than the arm 43d, and is formed with a window hole 24b at the tip portion thereof.

The arm 24a of the coulter support member 24 is linked to the arm 43d of the guide plate 43 through a link plate 46 having holes 46a and 46b at both end portions thereof. The hole 46a of the link plate 46 is linked to the window hole 24b of the arm 24a through a bolt, and the hole 46b is linked to a selected one of the selection holes 43e, 43f and 43g.

The selection holes 43e, 43f and 43g are used to keep the first coulter 37 perpendicular to the surface of soil being plowed at all times. The selection of any one of the selection holes 43e, 43f and 43g is made in consideration of the inclination of a tractor which is varied in accordance with the plowing depth. For example, if the plowing depth is larger, the tractor is more greatly inclined on a plane perpendicular to the plowing direction. In this case, the selection hole 43e is selected to incline (angularly move) the first coulter 37 in an opposite direction to the inclination direction of the tractor on the plane by a larger angle interlockingly with the reversing operation of the bottoms, so that the inclination of the tractor is countervailed by the inclination of the first coulter 37 and thus the coulter 37 is kept to be vertical to the surface of the soil. On the other hand, if the plowing depth is smaller, the tractor is slightly inclined on the plane. In this case, the selection hole 43g is selected to incline the first coulter 37 by a smaller angle interlockingly with the reversing operation of the bottoms, so that the coulter 37 is kept to be vertical to the surface of the soil. Therefore, in both cases, the first coulter 37 is inclined or angularly moved by an angle corresponding to the inclination of the tractor, that is, the plowing depth, so that the first coulter 37 can be kept to be vertical to the surface of the soil at all times.

The inclined state of the first coulter 37 in accordance with the selection of the selection holes 43e, 43f and 43g will be next described.

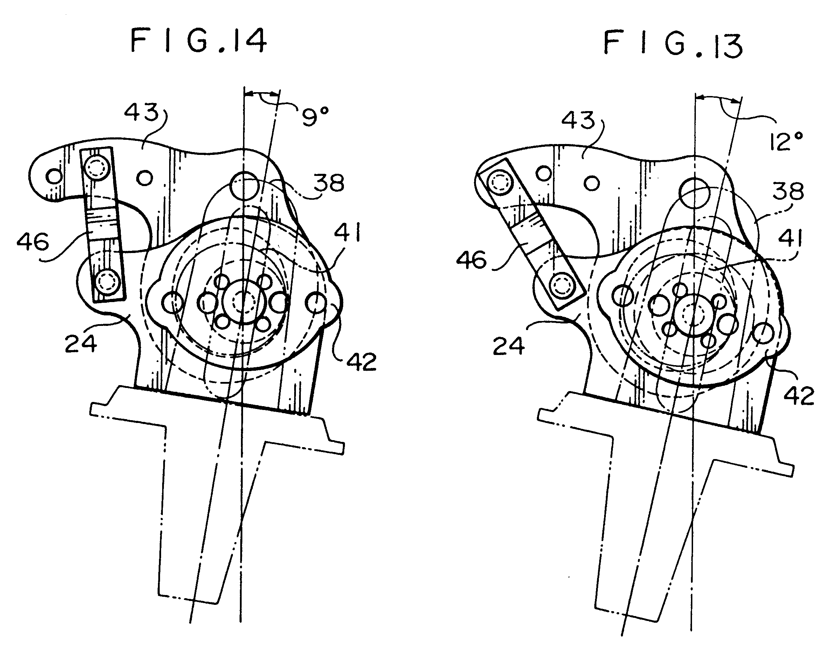

If the selection hole 43e is selected and linked to the window hole 42b of the cam plate 42 through the link plate 46, the first coulter 37 is inclined to the right side by 12° as shown in Fig. 13, and it is kept to be vertical to the surface of the soil being plowed. Likewise, the first coulter 37 is inclined to the right side by 9° as shown in Fig. 14 for the selection of the selection hole 43f while it is inclined to the right side by 6° as shown in Fig. 15 for the selection of the selection hole 43g. In other words, the plowing depth is sectioned into three degrees, and any one of the selection holes 43e, 43f and 43g is selected in accordance with one of the degrees to keep the first coulter to be vertical to the surface of the soil at all times. For example, if the plowing depth is larger, the selection hole 43e is linked to the window hole 42b to keep the first coulter to be vertical to the surface of the soil (in this case, the first coulter is inclined by 12° (largest angle) with respect to the tractor as shown in Fig. 13). On the other hand, if the plowing depth is smaller. the selection hole 43g is linked to the window hole 42b to keep the first coulter to be vertical to the surface of the soil (in this case, the first coulter is inclined by 6°(smallest angle) with respect to the tractor as shown in Fig. 15). If the plowing depth is an intermediate value between the largest and smallest values), the selection hole 43f is linked to the window hole 42b to keep the first coulter to be vertical to the surface of the soil (in this case, the first coulter Is Inclined by 9° (intermediate angle) with respect to the tractor as shown in Fig. 14).

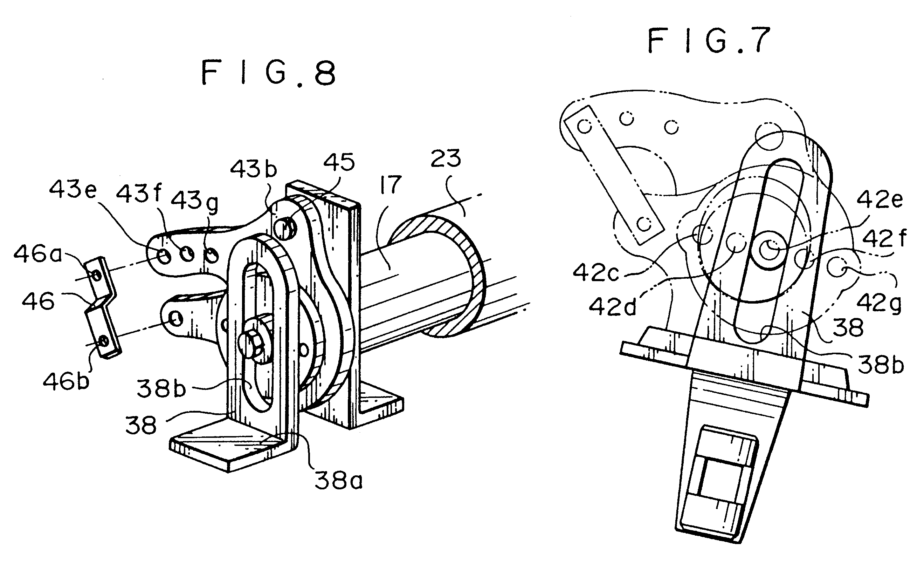

In addition, the cam plate 42 may be formed with plural adjustment bolt holes (or elongated holes) 42c to 42e which are aligned at predetermined intervals along the width direction of the plowing as shown in Fig. 12, and the cam plate 42 is secured to the swing arm 38 by commonly screwing a bolt 48 into one of the adjustment bolt holes 42c to 42e and a roller 47 which is engaged with the guide hole 38b of the suing arm 38 as shown in Fig. 8. The intervals of the alignment of the adjustment bolt holes 42c to 42e are set in accordance with difference of tread between different kinds of tractors. For examples, the tread is sectioned into, for example, five tread ranges from the smallest tread till the largest tread, and any one of the adjustment bolt holes 42c to 42e is selected in accordance with the tread range of an used tractor. If the tread of the used tractor is smaller, the offset amount (shift amount) of the bottoms in the width direction of the plowing which is caused by the reversing operation of the bottoms is also smaller. Therefore, in this case, the offset or shift amount of the first coulter 37 in the plow-width direction is set to be smaller. That is, the adjustment bolt hole 42f whose position is nearer to the center of the rotatable shaft 17 (i.e., the adjustment bolt hole having smaller eccentricity to the center of the rotatable shaft 17) is selected. If the offset of the bottoms scarcely occurs in the reversing operation, the adjustment bolt hole 42e whose position is nearest to the center of the rotatable shaft 17 is selected. On the other hand, if the tread of the tractor is larger and the offset amount of the bottoms in the reversing operation is largest, the adjustment bolt hole 42c whose position is farthest from the center of the rotatable shaft 17 (i.e., the adjustment bolt hole having the largest eccentricity to the center of the rotatable shaft 17) is selected. By the selection of the adjustment bolt hole 42c, the swing amplitude of the swing arm 38 is set to be largest, so that the shift amount of the first coulter 37 in the width direction of the plowing can be set to the largest value. That is, in a case where the roller 47 is secured to the cam plate 42 through the adjustment bolt hole 42c, the swing amplitude of the swing arm 38 is largest in the reversing operation of the bottoms. The swing of the swing arm 38 enables the coulter support member 24 to be swung, that is, enables the first coulter 37 to be moved or shifted in the width direction of the plowing by a larger distance. At this time, the coulter 24 is partially rotated around the pivot shaft 32a along the guide portion 31 of the guide plate 32 relatively to the first coulter 37.

A reference numeral 50 represents a reversing cylinder for reversing the bottoms. The reversing cylinder 50 is pivotably secured to the top portion of the mast 22 through a mount pin 51, and the front frame constituting the bottom frame and the other members behind the front frame are reversed by extending and retracting the reversing cylinder 50. That is, the reversing cylinder is supplied with a pressurised oil from a hydraulic pump to carry out its extending and retracting motion. The end portion of a cylinder rod 52 of the reversing cylinder 50 is pivotably mounted on the front frame constituting the bottom frame 10. The oil supply to the reversing cylinder 50 is controlled by a hydraulic circuit having a switching valve which is switched by difference of a pressure. First, the bottom frame 10 is rotated so as to be substantially erected by retracting the cylinder rod 52, and then reversed by extending the cylinder rod 52. The extracting and retracting motions of the cylinder rod 52 are controlled through the switching operation of the switching valve. Accordingly, the bottoms are reversed after the plowing operation for one line to thereby keep the bottoms 14a and 14b for a next plowing operation at the lower side of the bottom frame while the bottoms for a previous plowing operation is kept at the upper side of the bottom frame.

As described above, according to the coulter adjusting device for the reversible plowing machine of this invention, the first coulter is secured to the mast frame serving as a non-reversible member through the coulter support member, and the coulter support member is swung interlockingly with the reversible operation of the plow frame to incline the first coulter by an angle corresponding to a plowing depth and/or move the first coulter in the plowing width direction in accordance with the tread of an used tractor. That is, interlockingly with the reversing operation of the bottoms, the position of the first coulter can be automatically adjusted with a simple construction by inclining the first coulter in accordance with the plowing depth and/or by moving the first coulter by a predetermined offset amount. Therefore, the first coulter can be kept to be vertical to the surface of a field to be plowed at all times irrespective of the inclination of the tractor, and in addition the first coulter can be properly located in front of the reversed bottoms after the reversing operation of the bottoms.

## Claims

1. A reversible plow having non-reversible leading coulter (37) and a reversible bottom frame (10) carrying bottoms (14a, 14b) attached to the upper and lower sides thereof, and reversible coulters (16) corresponding to each pair of bottoms, and further comprising coulter position adjusting means (30) connected to said reversible frame, and arranged to adjust the position of the leading coulter (37) by a preset amount as the bottom frame is reversed, said coulter position adjusting means comprising means for converting the reversing motion of the bottom frame to an angular motion of the coulter, characterised in that said means comprises an eccentrically mounted cam plate (43) which is swingable as the bottom plate is reversed and is formed with a plurality of spaced apart connection means (43e, 43f, 43g) at predetermined intervals which are set to correspond to desired eccentric amounts, whereby a selected one of the connection means can be linked to said coulter support means to control the degree of adjustment of the coulter position, to allow for different plowing depths and/or the tread or track of a tractor towing the plow.

2. A reversible plow according to claim 1 further characterised in that each said connection means comprises a connection hole for receiving a bolt or pin.

3. A coulter adjusting device for use in a reversible plowing machine having a non-reversible mast frame (20) carrying a leading coulter (37), a bottom frame (10) secured to the non-reversible mast frame in such a manner as to be rotatable or reversible relative to the non-reversible mast frame, a rotatable shaft (17) for rotating or reversing the bottom frame, plural pairs of bottoms (14a, 14b) fixed to the bottom frame such that each pair of bottoms are secured to upper and lower sides of the bottom frame respectively, and coulters (16) provided in correspondence with each pair of bottoms, said adjusting device including means for adjusting the position of the non-reversible coulter (37) by moving the coulter on a plane perpendicular to a plowing direction by a desired amount in accordance with the plowing depth and/or the tread of a tractor towing the plowing machine as the bottom frame is reversed, wherein said adjusting means comprises coulter support means (30) for supporting the coulter, and eccentrically mounted coulter moving means secured to said coulter support means for converting a reversing motion of the bottom frame to a rotary motion thereof to thereby move said coulter support means by an amount corresponding to an eccentric amount of said coulter moving means, characterised in that said coulter moving means comprises an eccentrically mounted cam plate (43) which is swingable as the bottom plate is reversed and is formed with a plurality of spaced apart connection means (43e, 43f, 43g) at predetermined intervals which are set to correspond to desired eccentric amounts, whereby a selected one of the connection means can be linked to said coulter support means to control the degree of adjustment of the coulter position, to allow for different plowing depths and/or the tread or track of a tractor towing the plow.

4. A coulter adjusting device according to claim 3 further characterised in that each said connection means comprises a connection hole for receiving a bolt or pin.

5. A coulter adjusting device as claimed in claim 3 or claim 4, wherein said coulter moving means includes swing means (38) for converting the eccentrically-rotational motion to a swing or angular motion of said coulter support means on the plane, the eccentric amount corresponding to an angle of the angular motion of said coulter support means to thereby incline the coulter on the plane by the angle interlockingly with the reversing motion of the bottom frame so that the coulter is kept perpendicular to the surface of soil.

6. A coulter adjusting device according to any of claims 3 to 5 wherein said coulter moving means further comprises means for converting the eccentrically-rotational motion to a shift motion of said coulter support means in a lateral plow-width direction on the plane, the eccentric amount corresponding to a shift amount of the shift motion of said coulter support means to thereby shift the coulter on the plane by the shift amount interlockingly with the reversing motion of the bottom frame so that the coulter is kept located in front of the corresponding bottom.

7. A coulter adjusting device as claimed in claim 6, wherein said converting means comprises a cam plate (42) having a cam (41) whose centre is eccentric to the rotational centre of the bottom frame, said cam plate being secured to the bottom frame through the rotatable shaft (17) in such a manner that the centre of said cam is eccentric to the rotational centre of the rotatable shaft, and being formed with plural holes arranged in a radial direction of said cam plate at predetermined intervals which are set to correspond to desired eccentric amounts, and any selected one of the plural holes being linked to said coulter support means.

8. A coulter adjusting device according to any of claims 3 to 7, wherein said coulter support means comprises a guide plate (32) which has a sectorial portion (31) at a tip portion thereof and is pivotally secured to the mast frame at the other end portion thereof, a coulter support member having one end portion secured to said guide plate, said coulter support member being disposed between the rotatable shaft and said coulter moving means in such a manner as to be movable interlockingly with the rotational motion of the rotatable shaft, and a coulter unit body having one end portion which is pivotably secured to the mast frame coaxially with said guide plate in such a manner that said guide plate is mounted on said coulter unit body and the other end portion of which is downwardly bent and secured to the coulter.

## Patentansprüche

1. Drehpflug mit einem nicht-drehfähigen vorderen Sech (37) und einem drehfähigen Sohlenrahmen (10), der an seiner oberen und unteren Seite angebrachte Sohlen (14a, 14b) und jedem Sohlenpaar entsprechende drehfähige Seche (16) trägt, und ferner mit einer mit dem genannten drehfähigen Rahmen verbundenen Stelleinrichtung (30) für die Sechposition, mit der die Position des vorderen Seches (37) um ein vorgegebenes Stuck verstellt werden kann, wenn der Sohlenrahmen gedreht wird, wobei die Stelleinrichtung der Sechposition Mittel zur Umsetzung der Drehbewegung des Sohlenrahmens in eine Winkelbewegung des Seches umfaßt, dadurch gekennzeichnet, daß das genannte Mittel eine exzentrisch angebrachte Nockenplatte (43) umfaßt, die beim Drehen der Sohlenplatte schwenkbar ist und an der mehrere auf Abstand gehaltene Verbindungsmittel (43e, 43f, 43g) mit bestimmten Zwischenräumen ausgebildet sind, die entsprechend den gewünschten Exzentrizitäten angesetzt sind, so daß ein ausgewähltes Verbindungsmittel zur Steuerung der Einstellung der Sechposition mit der genannten Sechträgereinrichtung verbunden werden kann, um unterschiedliche Pflugtiefen und/oder die Spur oder Fahrbahn eines den Pflug ziehenden Traktors zu ermöglichen.

2. Drehpflug nach Anspruch 1. dadurch gekennzeichnet, daß jedes Verbindungsmittel ein Verbindungsloch zur Aufnahme eines Bolzens oder Stiftes umfaßt.

3. Sech-Stelleinrichtung zur Benutzung in einer Drehpflugmaschine mit einem nicht-drehfähigen, ein vorderes Sech (37) tragenden Mastrahmen (20), einem an dem nicht-drehfähigen Mastrahmen so angebrachten Sohlenrahmen (10), daß dieser relativ zu dem nicht-drehfähigen Mastrahmen gedreht oder gewendet werden kann, einer drehbaren Welle (17) zurDrehung oder Wendung des Sohlenrahmens, mehreren an dem Sohlenrahmen so befestigten Sohlenpaaren (14a, 14b), daß jedes Sohlenpaar an der Ober- bzw. Unterseite des Sohlenrahmens befestigt ist, und in Entsprechung zu jedem Sohlenpaar vorgesehene Seche (16), wobei die Stelleinrichtung Mittel zur Einstellung der Position des nicht-drehfähigen Seches (37) durch Bewegung des Seches auf einer zu der Pflügerichtung senkrechten Ebene um eine gewünschte Strecke entsprechend der Pflügetiefe und/oder der Spur eines die Pflugmaschine ziehenden Traktors, wenn der Sohlenrahmen gedreht wird, wobei die genannten Stellmittel Sechhalter (30) zum Halten des Seches und exzentrisch angebrachte Sech-Bewegungsmittel umfassen, die an dem genannten Sechhalter angebracht sind, um die Wendebewegung des Sohlenrahmens in seine Drehbewegung umzusetzen, um dadurch den genannten Sechhalter um eine Strecke entsprechend der Exzentrizität der genannten Sech-Bewegungsmittel zu bewegen, dadurch gekennzeichnet, daß das genannte Sech-Bewegungsmittel eine exzentrisch angebrachte Nockenplatte (43) umfaßt, die beim Drehen der Sohlenplatte schwenkbar ist und an der mehrere auf Abstand gehaltene Verbindungsmittel (43e, 43f, 43g) mit bestimmten Zwischenräumen ausgebildet sind, die entsprechend den gewünschten Exzentrizitäten angesetzt sind, so daß ein ausgewähltes Verbindungsmittel zur Steuerung der Einstellung der Sechposition mit der genannten Sechträgereinrichtung verbunden werden kann, um unterschiedliche Pflugtiefen und/oder die Spur oder Fahrbahn eines den Pflug ziehenden Traktors zu ermöglichen.

4. Sech-Stelleinrichtung nach Anspruch 3, dadurch gekennzeichnet, daß jedes Verbindungsmittel ein Verbindungsloch zur Aufnahme eines Bolzens oder Stiftes umfaßt.

5. Sech-Stelleinrichtung nach Anspruch 3 oder Anspruch 4, bei der die Sech-Bewegungsmittel Schwenkmittel (38) zur Umsetzung der exzentrischen Drehbewegung in eine Schwenk- oder Winkelbewegung des Sechhalters auf derEbene umfassen, wobei die Exzentrizität einem Winkel der Winkelbewegung des Sechhalters entspricht, um dadurch das Sech auf der Ebene um den mit der Wendebewegung des Sohlenrahmens verzahnten Winkel zu neigen, so daß das Sech senkrecht zur Bodenoberfläche gehalten wird.

6. Sech-Stelleinrichtung nach einem der Ansprüche 3 bis 5, bei der die genannten Sech-Bewegungsmittel Mittel zur Umsetzung der exzentrischen Drehbewegung in eine Schiebebewegung des Sechhalters auf der Ebene in Richtung der Pflugbreite umfassen, wobei die Exzentrizität einer Verschiebestrecke der Verschiebebewegung des Sechhalters entspricht, um so das Sech auf der Ebene um die mit der Wendebewegung des Sohlenrahmens verzahnte Schiebestrecke zu verschieben, so daß das Sech vor der zugeordneten Sohle gehalten wird.

7. Sech-Stelleinrichtung nach Anspruch 6, bei der die genannten Umsetzungsmittel eine Nockenscheibe (42) mit einem Nocken (41) umfassen, dessen Mittelpunkt exzentrisch zu dem Drehmittelpunkt des Sohlenrahmens liegt, wobei die Nockenscheibe an dem Sohlenrahmen durch die Drehwelle (17) so befestigt ist, daß der Mittelpunkt des Nockens exzentrisch zu dem Drehmittelpunkt der drehbaren Welle ist, und in radialer Richtung der genannten Nockenplatte mehrere Löcher in bestimmten Abständen ausgebildet sind, die entsprechend den gewünschten Exzentrizitäten angeordnet sind, und wobei irgendein ausgewähltes Loch aus der Mehrzahl der Löcher mit dem genannten Sechhalter verbunden ist.

8. Sech-Stelleinrichtung nach einem der Ansprüche 3 bis 7, bei der die genannten Sechhalter eine Führungsplatte (32) umfassen, die an ihrer Spitze ein Sektorteil (31) hat und an ihrem anderen Ende schwenkbar an dem Mastrahmen angebracht ist, wobei der Sechhalter mit einem Ende an der genannten Führungsplatte angebracht ist und der genannte Sechhalter zwischen der Drehwelle und dem genannten Sech-Bewegungsmittel so angeordnet ist, daß er mit der Drehbewegung der Drehwelle verzahnt bewegbar ist, und wobei ein Secheinheitskörper mit einem Ende schwenkbar an dem Mastrahmen koaxial mit der Führungsplatte derart angebracht ist, daß die Führungsplatte auf dem genannten Secheinheitskörper montiert ist, und mit dem anderen, abwärts gebogenen Ende an dem Sech befestigt ist.

## Revendications

1. Charrue à soc renversable ayant un coutre de tête non renversable (37) et un châssis porte-socs renversable (10) qui supporte les socs (14a, 14b) qui sont fixés au côté inférieur et au côté supérieur du châssis porte-socs, et des coutres renversables (16) correspondant à chacune des paires de socs, et comprenant en outre un moyen de réglage de position de coutre (30) raccordé à ce châssis porte-socs renversable, et aménagé pour permettre le réglage de la position du coutre avant (37) d'une quantité prédéterminée lorsque le châssis porte-socs est renversé, ce moyen de réglage de position du coutre comprenant en outre un moyen pour convertir le mouvement de renversement du châssis porte-socs en un déplacement angulaire du coutre,
caractérisée par le fait que ce moyen de réglage de position de coutre (30) comprend une plaque de came excentrique (43) qui peut basculer lorsque la lame de soc est renversée, cette plaque de came étant formée par une pluralité de moyens de raccordement séparés les uns des autres (43e, 43f, 43g) par des intervalles déterminés fixés de manière à ce qu'ils correspondent à des quantité d'excentrique déterminées ce qui permet à un des moyens de raccordement particulier d'être relié au moyen de support de coutre pour contrôler le degré de réglage de position du coutre, pour permettre différentes profondeurs de sillon et ou d'empreinte/bande de roulement du tracteur qui remorque la charrue.

2. Charrue renversable selon la revendication 1 caractérisée en outre par le fait que chacun des moyens de raccordement en question est constitué par un trou de raccordement dans lequel se loge un boulon ou un axe.

3. Dispositif de réglage de coutre permettant d'utiliser une machine de labourage renversable comportant un châssis porte-coutre non renversable en profilé (20) qui supporte le coutre avant (37), un châssis porte-socs (10) fixé au châssis-porte coutre non renversable en profilé (20) d'une manière qui permette au châssis porte-socs (10) de pivoter ou d'être renversé par rapport au châssis-porte coutre non renversable (20), un arbre rotatif (17) pour faire tourner ou renverser le châssis porte-socs (10), la pluralité de paires de socs (14a, 14b) fixées au châssis porte-socs de façon à ce que chaque paire de socs soit fixée au côté supérieur et au côté inférieur du châssis porte-socs respectivement et des coutres (16) qui occupent des emplacements leur permettant de coïncider avec chaque paire de socs, ce dispositif de réglage de coutre comprenant un moyen de réglage de la position du coutre non renversable (37) en déplaçant le coutre dans un plan perpendiculaire à la direction de labourage d'une quantité souhaitée, laquelle quantité est fonction de la profondeur du sillon et/ou de l'empreinte/bande de roulement du tracteur qui remorque la machine de labourage lorsque le châssis porte-socs est renversé, dans lequel dispositif le moyen de réglage comprend un moyen de support de coutre (30) pour supporter le coutre, et un moyen de déplacement du coutre monté de manière excentrique fixé à ce moyen de support de coutre (30) pour convertir le mouvement de renversement du châssis porte-socs en un mouvement de rotation du coutre pour déplacer de cette façon le moyen de support de coutre (30) d'une quantité correspondant à la quantité d'excentrique du moyen de déplacement du coutre,
caractérisé par le fait que ce moyen de déplacement du coutre comprend une plaque de came excentrique (43) qui peut basculer pendant que la lame de soc est renversée et par le fait que cette plaque de came excentrique (43) est constituée par une pluralité de moyens de raccordements séparés les uns des autres (43e, 43f, 43g) par des intervalles prédéterminés qui ont été fixés de manière à ce qu'ils correspondent aux quantités d'excentrique souhaitées, ce qui permet à un de ces moyens de raccordements donné d'être relié au moyen de support de coutre (30) pour contrôler le degré de réglage de position du coutre, pour permettre différentes profondeurs de sillon et/ou d'empreinte/bande de roulement du tracteur qui remorque la charrue.

4. Dispositif de réglage du coutre selon la revendication 3, caractérisé en outre par le fait que chacun des moyens de raccordement (43e, 43f, 43g) comprend un trou de raccordement pour recevoir un bouton ou un axe.

5. Dispositif de réglage de coutre selon la revendication 3 ou la revendication 4, dans lequel le moyen de déplacement du coutre comporte un moyen de basculement (38) pour convertir le mouvement de rotation excentrique en un mouvement de basculement ou en déplacement angulaire de ce moyen de support de coutre dans le plan, la quantité d'excentrique correspondant à un angle de déplacement angulaire du moyen de support de coutre, ce qui permet d'incliner le coutre dans le plan d'une quantité égale à l'angle en fonction du moyen de renversement du châssis porte-socs, et en même temps que ce moyen de renversement, de façon à ce que le coutre soit maintenu perpendiculaire à la face du sol.

6. Dispositif de réglage de coutre selon l'une quelconque des revendications 3 à 5, dans lequel le moyen de déplacement du coutre comprend en outre un moyen de conversion du déplacement rotatif excentrique en mouvement de décalage du moyen de support de coutre dans la direction latérale de la charrue dans le plan, la quantité d'excentrique correspondant à la quantité de décalage du mouvement de décalage du moyen de support de coutre pour pouvoir décaler de cette façon le coutre dans le plan d'une quantité égale à la quantité de décalage en fonction du mouvement de renversement et en même temps que ce mouvement du châssis porte-socs de façon à ce que le coutre reste en position devant le soc correspondant.

7. Dispositif de réglage du coutre selon la revendication 6, dans lequel le moyen de conversion de déplacement comprend une plaque de came (42) ayant une came (41) dont le centre est excentrique par rapport au centre de rotation du châssis porte-socs, cette plaque de came étant fixée au châssis porte-socs par l'intermédiaire d'un arbre rotatif (17) de façon à ce que le centre de cette plaque de came soit excentré par rapport au centre de rotation de l'arbre rotatif, et cette plaque de came (42) étant formée d'une pluralité de trous aménagés dans une direction radiale de cette plaque de came (42) à des intervalles prédéterminés ayant été fixés de manière à correspondre aux quantités d'excentrique souhaitées, et l'un quelconque de ces trous donné est relié au moyen de support de coutre.

8. Dispositif de réglage de coutre selon l'une quelconque des revendications 3 à 7 ci-dessus, dans lequel le moyen de support de coutre est constitué par une plaque de guidage (32) qui comporte une partie à niveau décalé (31) à une extrémité de cette plaque de guidage et fixée par un pivot au châssis porte-coutre à son autre extrémité, un élément de support de coutre ayant une extrémité fixée à la plaque de guidage, cet élément support de coutre étant placé entre l'arbre rotatif et le moyen de déplacement du coutre de manière à ce qu'il puisse se déplacer simultanément et en fonction du mouvement rotatif de l'arbre rotatif, et un corps de coutre ayant une de ces extrémités fixée par un pivot au châssis porte-coutre coaxialement avec la plaque de guidage de manière à ce que la plaque de guidage soit montée sur le corps de coutre et que l'autre extrémité du corps de coutre soit repliée vers le bas et fixée au coutre.
